# EUROPEAN PATENT APPLICATION

(11) **EP 3 136 692 A1**
(43) Date of publication of application: **01.03.2017**
(21) Application number: 16183116.9
(22) Date of filing: 05.08.2016
(51) Int. Cl.: H04L 29/08, H04L 29/06

(54) **TRUSTING INTERMEDIATE CERTIFICATE AUTHORITIES**

(30) Priority: 27.08.2015 US 201514837634
(71) Applicant: SONY CORPORATION, Minato-ku Tokyo 108-0075 (JP)
(72) Inventor: Candelore, Brant, San Diego, CA California 92127 (US)
(74) Representative: D Young & Co LLP

(57) **Abstract**

A modification to commercial browsers is made that can enable them to detect a change in the server certificate of certain sensitive websites. Browsers are modified to remember certain fields in a certificate, the entire certificate, or hashes of certain fields or the entire certificate. When revisiting the website, if the website certificate changed, then the user or browser can be alerted to a change in the certificate with further action taken to determine the nature of the change and raise an alert if necessary. To accomplish this, for certain sensitive websites, browsers create a local database of websites with their corresponding server fields/certificates/hash. Later, upon a revisit to those websites, browsers will compare the certificate data received with the stored information. Alternatively to a local cash of server certificate information, the browser can send the data to compare to a trusted website to analyze.

## Description

The application relates generally to trusting, or not, certificate authorities on the Internet.

Popular Internet browsers such as Internet Explorer, Safari, Chrome, Opera, and Mozilla (all of which should be considered to be trademarks) reference a number of certificate authority (CA) and intermediate CA public key certificates in a local cache resident on a client device. These CA or intermedia CA certificates are intended to be used by Internet applications, such as a web browsers, to validate any server certificate that it might encounter on the World Wide Web. Server certificates are received by client devices such as PCs, tablets and smart phones when visiting certain websites that invoke Transport Layer Security (TLS) which is associated with Hypertext Transfer Protocol Secure (HTTPS). As of this writing, popular browsers typically have hundreds of CA and Intermediate CA certificates in the local cache. The specific servers that the certificates are each intended to authenticate are not known to the browser.

As understood herein, a website may have a server certificate signed by the certificate authority or by an intermediate certificate authority (one whose trust is established by a certificate authority). A compromise of any of the referenced CA or intermediate CA certificates could allow the fraudulent synthesis of any server certificate, even one that did not originally use the particular CA or intermediate CA in the authentic server certificate. A fraudulent server certificate can allow for the interception of a user's credentials used to access any website and eavesdropping on communication. If the keys of a particular server certificate were compromised, then sensitive information for only that website would be at risk. As of this writing, fraudulent use of any of the CA or intermediate CA in the local cache, could allow compromise of all websites visited. If the compromised keys of CA or intermediate CA certificate were used discreetly by a hacker, e.g. on a user-by-user basis and intermittently, then the activity might escape detection for a long time. It would currently be difficult for modern browsers to detect a server certificate is fraudulent when it is authenticated by a compromised CA or intermediate CA that is believed to be trusted by the web application.

As further understood herein, the above drawback has emerged as important, because recent revelations have revealed the surreptitious capability to intercept Internet queries from client devices without the devices' browsers alerting the user that something was amiss has actually occurred. It is believed that this may be facilitated when the interceptor gains control of a CA or intermediate CA whose public key certificate has been pre-loaded in the browser's certificate cache along with many others, and using that, acts as a "man-in-the-middle" between a real website and a client device or redirects traffic to an imposter website controlled by the interceptor. The compromised CA or intermediate CA could sign a "fake" server certificate for the imposter website. As mentioned above, browsers are not able to tell which website server certificates the CAs or intermediate CAs are supposed to be authenticating. If they are loaded in the browser's certificate cache, then they are all "trusted". A hacker can compromise any of the CAs or intermediate CAs and use that one to sign a server certificate for any website even though a different CA would have signed the legitimate server certificate. When accessing the imposter website using HTTPS, TLS is invoked in which the server certificate would be used. The client device would invoke security using the imposter server certificate that is provided by the server itself, the user would see "HTTPS" on the uniform resource listing (URL) link, the browser would show a "green lock", and the user would think that he or she is "protected" and that a secure communication session was established with the legitimate remote website, and would not be aware of any problem.

Accordingly, present principles provide a modification to commercial browsers so that they are more proactively engaged in detecting a security compromise. Present principles allow commercial browsers to detect if a server certificate has been changed and the CA has been switched. The user can interface with the browser, or other web application, in order to have it "remember the website certificate". This could be done by actively engaging the user when visiting a site, e.g. by clicking on a button on screen, or be done by a browser setting to have the browser remember the certificate in the background. A user might wish to do this for certain sensitive sites such as financial or email accounts. Alternatively, every website that is made a favorite could be automatically remembered thereby alleviating the user from having to do anything specific. When revisiting the website, if the server certificate changed, then the web application, e.g. web browser, or user can be alerted to a change in the certificate. To accomplish this, the browser creates a local database of server certificates that is used to check targeted websites. Any change in the server certificate from the last recorded server certificate for that site alerts the user that something has transpired.. In many cases, the stored certificate will have expired with all of the fields, even the public key, remaining the same including the certificate authority. In such an instance, the cached and older certificate would be replaced by the new certificate with an expiry date in the future. It should be noted that the entire certificate for the website need not be recorded. Rather, a hash of selected fields or a hash of the server's entire certificate could be recorded instead. Any change in the fields of the server certificate would result in a different hash being calculated. Comparing the calculated hash of the newly received certificate with the stored hash would have the same result as comparing the selected fields or entire certificate for any type of change. If there is a change, the browser can determine whether or not it was an update due to expiration which might cause the stored certificate to be replaced, and a different change which might require other action, e.g. a change in CA or intermediate CA might require research to see if it is legitimate. A change in the certificate authority would be considered a serious change which requires more analysis.

In addition or alternatively, the CA for a verification website can be hard coded into the web browser, and a client device can pass a presented server certificate to the verification website, which verifies whether the CA listed in the certificate is the valid one for a particular website.

Accordingly, in an embodiment, an apparatus has a computer memory that is not a transitory signal and that includes instructions executable by a processor to receive, at a user device, a web application command to navigate to a target web site. The instructions are executable to receive a first certificate of the target web site, present a user interface (UI) on the user device prompting as to whether the certificate (or hash of the certificate) should be recorded by the user device, and responsive to first input from the UI indicating the certificate (or hash of the certificate) should be recorded by the user device, record, by the user device, the first certificate. In contrast, the instructions are executable to, responsive to second input from the UI indicating the certificate should not be recorded by the user device, not record, by the user device, the first certificate. As mentioned, recording can be done automatically for websites if they are listed as a user favorite and not recorded if the website is not a favorite. The instructions are executable such that subsequent to receiving the first input, a browser navigation command is received to navigate to the target web site. A second certificate of the target web site is received and compared to the first certificate recorded by the user device. Responsive to the first certificate (or hash) matching the second certificate (or hash), normal navigation to the target web site is indicated; otherwise, an alert is presented on the user device.

In some implementations, the instructions are executable to, responsive to the first certificate (or hash) not matching the second certificate (or hash), present on the user device a selector to override the alert and complete normal navigation to the target web site.

In example implementations, the instructions are executable to, responsive to the first certificate (or hash) not matching the second certificate (or hash), present on the user device a selector to report that the second certificate does not match the first certificate. The instructions can optionally show on the user device the differences in the fields between the certificates. For example, the instructions could that the CA or intermediate CA changed between the certificates which would be problematic, or that the old certificate expiration date had occurred with the new one issued with a new expiration date which might be a normal occurrence in the management of server certificates.

In examples, the instructions are executable to, subsequent to receiving the second input, receive, at the user device, a browser navigation command to navigate to the target web site, receive a second certificate of the target web site, trust the second certificate and complete normal navigation to the target web site.

In another aspect, an apparatus includes a computer memory that is not a transitory signal and that includes instructions executable by a processor to receive, at a user device, a browser navigation command to navigate to a target web site. A certificate of the target web site is received, and prior to completing the navigation command, the certificate is sent to a verification server. Responsive to a first signal from the verification server sent in response to the verification server testing the certificate, normal navigation to the target web site may be indicated. However, responsive to a second signal from the verification server sent in response to the verification server testing the certificate, an alert may be presented on the user device.

Note that this second aspect may be combined with the first such that both tests (local database comparison, and verification server validation) must pass to permit or enable or otherwise indicate normal navigation to the web site.

In another aspect, a method includes, at a verification server, receiving from a user device a target certificate of a target web site not hosted by the verification server. At the verification server, the target certificate is compared to a previously stored certificate of the target web site, and responsive to a determination that the target certificate matches the previously stored certificate, a first signal is send to the user device indicating that the user device may safely complete navigation to the target web site. On the other hand, responsive to a determination that the target certificate does not match the previously stored certificate, a second signal is sent to the user device indicating that the user device may not safely complete navigation to the target web site.

Embodiments of the invention will now be described with reference to the accompanying drawings, throughout which like parts are referred to by like references, and in which:

The details of the present application, both as to its structure and operation, can best be understood in reference to the accompanying drawings, in which like reference numerals refer to like parts, and in which:
Figure 1 is a block diagram of an example system including an example in accordance with present principles;
Figure 2 is a block diagram of another system that can use the components of Figure 1;
Figure 3 is a block diagram of an example specific system;
Figure 4 is a flow chart of example set up logic;
Figure 5 is a screen shot of an example user interface (UI) appertaining to Figure 4;
Figure 6 is a flow chart of a first example operational logic;
Figure 7 is a screen shot of an example UI appertaining to Figure 5;
Figure 8 is a flow chart of a second example operational logic; and
Figure 9 is a flow chart of example server logic to be used in cooperation with the logic of Figure 8.

This disclosure relates generally to computer ecosystems including aspects of consumer electronics (CE) device networks. A system herein may include server and client components, connected over a network such that data may be exchanged between the client and server components. The client components may include one or more computing devices including portable televisions (e.g. smart TVs, Internet-enabled TVs), portable computers such as laptops and tablet computers, and other mobile devices including smart phones and additional examples discussed below. These client devices may operate with a variety of operating environments. For example, some of the client computers may employ, as examples, operating systems from Microsoft, or a Unix operating system, or operating systems produced by Apple Computer or Google. These operating environments may be used to execute one or more browsing programs, such as a browser made by Microsoft or Google or Mozilla or other browser program that can access websites hosted by the Internet servers discussed below.

Servers and/or gateways may include one or more processors executing instructions that configure the servers to receive and transmit data over a network such as the Internet. Or, a client and server can be connected over a local intranet or a virtual private network. A server or controller may be instantiated by a game console such as a Sony Playstation (trademarked), a personal computer, etc.

Information may be exchanged over a network between the clients and servers. To this end and for security, servers and/or clients can include firewalls, load balancers, temporary storages, and proxies, and other network infrastructure for reliability and security. One or more servers may form an apparatus that implement methods of providing a secure community such as an online social website to network members.

As used herein, instructions refer to computer-implemented steps for processing information in the system. Instructions can be implemented in software, firmware or hardware and include any type of programmed step undertaken by components of the system.

A processor may be any conventional general purpose single- or multi-chip processor that can execute logic by means of various lines such as address lines, data lines, and control lines and registers and shift registers.

Software modules described by way of the flow charts and user interfaces herein can include various sub-routines, procedures, etc. Without limiting the disclosure, logic stated to be executed by a particular module can be redistributed to other software modules and/or combined together in a single module and/ or made available in a shareable library.

Present principles described herein can be implemented as hardware, software, firmware, or combinations thereof; hence, illustrative components, blocks, modules, circuits, and steps are set forth in terms of their functionality.

Further to what has been alluded to above, logical blocks, modules, and circuits described below can be implemented or performed with a general purpose processor, a digital signal processor (DSP), a field programmable gate array (FPGA) or other programmable logic device such as an application specific integrated circuit (ASIC), discrete gate or transistor logic, discrete hardware components, or any combination thereof designed to perform the functions described herein. A processor can be implemented by a controller or state machine or a combination of computing devices.

The functions and methods described below, when implemented in software, can be written in an appropriate language such as but not limited to C# or C++, and can be stored on or transmitted through a computer-readable storage medium such as a random access memory (RAM), read-only memory (ROM), electrically erasable programmable read-only memory (EEPROM), compact disk read-only memory (CD-ROM) or other optical disk storage such as digital versatile disc (DVD), magnetic disk storage or other magnetic storage devices including removable thumb drives, etc. A connection may establish a computer-readable medium. Such connections can include, as examples, hard-wired cables including fiber optics and coaxial wires and digital subscriber line (DSL) and twisted pair wires. Such connections may include wireless communication connections including infrared and radio.

Components included in one embodiment can be used in other embodiments in any appropriate combination. For example, any of the various components described herein and/or depicted in the Figures may be combined, interchanged or excluded from other embodiments.

"A system having at least one of A, B, and C" (likewise "a system having at least one of A, B, or C" and "a system having at least one of A, B, C") includes systems that have A alone, B alone, C alone, A and B together, A and C together, B and C together, and/or A, B, and C together, etc.

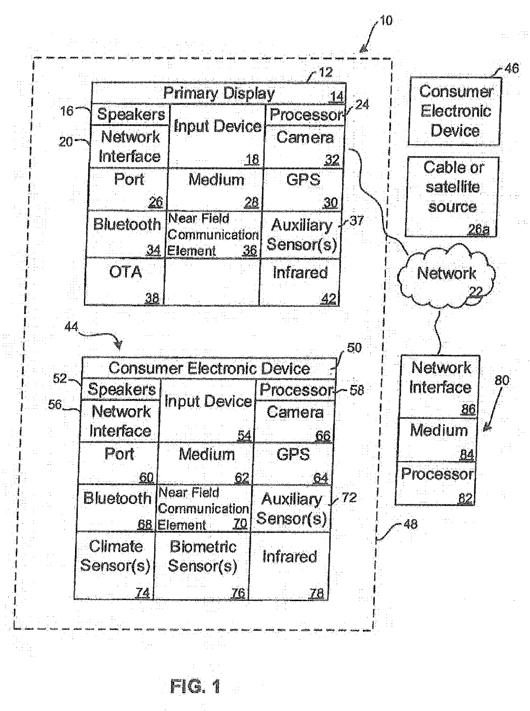

Now specifically referring to Figure 1, an example ecosystem 10 is shown, which may include one or more of the example devices mentioned above and described further below in accordance with present principles. The first of the example devices included in the system 10 is a consumer electronics (CE) device configured as an example primary display device, and in the embodiment shown is an audio video display device (AVDD) 12 such as but not limited to an Internet-enabled TV with a TV tuner (equivalently, set top box controlling a TV). However, the AVDD 12 alternatively may be an appliance or household item, e.g. computerized Internet enabled refrigerator, washer, or dryer. The AVDD 12 alternatively may also be a computerized Internet enabled ("smart") telephone, a tablet computer, a notebook computer, a wearable computerized device such as e.g. computerized Internet-enabled watch, a computerized Internet-enabled bracelet, other computerized Internet-enabled devices, a computerized Internet-enabled music player, computerized Internet-enabled head phones, a computerized Internet-enabled implantable device such as an implantable skin device, etc. Regardless, it is to be understood that the AVDD 12 is configured to undertake present principles (e.g. communicate with other CE devices to undertake present principles, execute the logic described herein, and perform any other functions and/or operations described herein).

Accordingly, to undertake such principles the AVDD 12 can be established by some or all of the components shown in Figure 1. For example, the AVDD 12 can include one or more displays 14 that may be implemented by a high definition or ultra-high definition "4K" or higher flat screen and that may be touch-enabled for receiving user input signals via touches on the display. The AVDD 12 may include one or more speakers 16 for outputting audio in accordance with present principles, and at least one additional input device 18 such as e.g. an audio receiver/microphone for e.g. entering audible commands to the AVDD 12 to control the AVDD 12. The example AVDD 12 may also include one or more network interfaces 20 for communication over at least one network 22 such as the Internet, an WAN, an LAN, etc. under control of one or more processors 24. Thus, the interface 20 may be, without limitation, a Wi-Fi transceiver, which is an example of a wireless computer network interface, such as but not limited to a mesh network transceiver. It is to be understood that the processor 24 controls the AVDD 12 to undertake present principles, including the other elements of the AVDD 12 described herein such as e.g. controlling the display 14 to present images thereon and receiving input therefrom. Furthermore, note the network interface 20 may be, e.g., a wired or wireless modem or router, or other appropriate interface such as, e.g., a wireless telephony transceiver, or Wi-Fi transceiver as mentioned above, etc.

In addition to the foregoing, the AVDD 12 may also include one or more input ports 26 such as, e.g., a high definition multimedia interface (HDMI) port or a USB port to physically connect (e.g. using a wired connection) to another CE device and/or a headphone port to connect headphones to the AVDD 12 for presentation of audio from the AVDD 12 to a user through the headphones. For example, the input port 26 may be connected via wire or wirelessly to a cable or satellite source 26a of audio video content. Thus, the source 26a may be, e.g., a separate or integrated set top box, or a satellite receiver. Or, the source 26a may be a game console or disk player containing content that might be regarded by a user as a favorite for channel assignation purposes described further below.

The AVDD 12 may further include one or more computer memories 28 such as disk-based or solid state storage that are not transitory signals, in some cases embodied in the chassis of the AVDD as standalone devices or as a personal video recording device (PVR) or video disk player either internal or external to the chassis of the AVDD for playing back AV programs or as removable memory media. Also in some embodiments, the AVDD 12 can include a position or location receiver such as but not limited to a cellphone receiver, GPS receiver and/or altimeter 30 that is configured to e.g. receive geographic position information from at least one satellite or cellphone tower and provide the information to the processor 24 and/or determine an altitude at which the AVDD 12 is disposed in conjunction with the processor 24. However, it is to be understood that that another suitable position receiver other than a cellphone receiver, GPS receiver and/or altimeter may be used in accordance with present principles to e.g. determine the location of the AVDD 12 in e.g. all three dimensions.

Continuing the description of the AVDD 12, in some embodiments the AVDD 12 may include one or more cameras 32 that may be, e.g., a thermal imaging camera, a digital camera such as a webcam, and/or a camera integrated into the AVDD 12 and controllable by the processor 24 to gather pictures/images and/or video in accordance with present principles. Also included on the AVDD 12 may be a Bluetooth transceiver 34 and other Near Field Communication (NFC) element 36 for communication with other devices using Bluetooth and/or NFC technology, respectively. An example NFC element can be a radio frequency identification (RFID) element.

Further still, the AVDD 12 may include one or more auxiliary sensors 37 (e.g., a motion sensor such as an accelerometer, gyroscope, cyclometer, or a magnetic sensor, an infrared (IR) sensor, an optical sensor, a speed and/or cadence sensor, a gesture sensor (e.g. for sensing gesture command), etc.) providing input to the processor 24. The AVDD 12 may include an over-the-air TV broadcast port 38 for receiving OTH TV broadcasts providing input to the processor 24. In addition to the foregoing, it is noted that the AVDD 12 may also include an infrared (IR) transmitter and/or IR receiver and/or IR transceiver 42 such as an IR data association (IRDA) device. A battery (not shown) may be provided for powering the AVDD 12.

Still referring to Figure 1, in addition to the AVDD 12, the system 10 may include one or more other CE device types. In one example, a first CE device 44 may be used to control the display via commands sent through the below-described server while a second CE device 46 may include similar components as the first CE device 44 and hence will not be discussed in detail. In the example shown, only two CE devices 44, 46 are shown, it being understood that fewer or greater devices may be used.

In the example shown, to illustrate present principles all three devices 12, 44, 46 are assumed to be members of an entertainment network in, e.g., a home, or at least to be present in proximity to each other in a location such as a house. However, for present principles are not limited to a particular location, illustrated by dashed lines 48, unless explicitly claimed otherwise.

The example non-limiting first CE device 44 may be established by any one of the above-mentioned devices, for example, a portable wireless laptop computer or notebook computer or game controller, and accordingly may have one or more of the components described below. The second CE device 46 without limitation may be established by a video disk player such as a Blu-ray player, a game console, and the like. The first CE device 44 may be a remote control (RC) for, e.g., issuing AV play and pause commands to the AVDD 12, or it may be a more sophisticated device such as a tablet computer, a game controller communicating via wired or wireless link with a game console implemented by the second CE device 46 and controlling video game presentation on the AVDD 12, a personal computer, a wireless telephone, etc.

Accordingly, the first CE device 44 may include one or more displays 50 that may be touch-enabled for receiving user input signals via touches on the display. The first CE device 44 may include one or more speakers 52 for outputting audio in accordance with present principles, and at least one additional input device 54 such as e.g. an audio receiver/microphone for e.g. entering audible commands to the first CE device 44 to control the device 44. The example first CE device 44 may also include one or more network interfaces 56 for communication over the network 22 under control of one or more CE device processors 58. Thus, the interface 56 may be, without limitation, a Wi-Fi transceiver, which is an example of a wireless computer network interface, including mesh network interfaces. It is to be understood that the processor 58 controls the first CE device 44 to undertake present principles, including the other elements of the first CE device 44 described herein such as e.g. controlling the display 50 to present images thereon and receiving input therefrom. Furthermore, note the network interface 56 may be, e.g., a wired or wireless modem or router, or other appropriate interface such as, e.g., a wireless telephony transceiver, or Wi-Fi transceiver as mentioned above, etc.

In addition to the foregoing, the first CE device 44 may also include one or more input ports 60 such as, e.g., a HDMI port or a USB port to physically connect (e.g. using a wired connection) to another CE device and/or a headphone port to connect headphones to the first CE device 44 for presentation of audio from the first CE device 44 to a user through the headphones. The first CE device 44 may further include one or more tangible computer readable storage medium 62 such as disk-based or solid state storage. Also in some embodiments, the first CE device 44 can include a position or location receiver such as but not limited to a cellphone and/or GPS receiver and/or altimeter 64 that is configured to e.g. receive geographic position information from at least one satellite and/or cell tower, using triangulation, and provide the information to the CE device processor 58 and/or determine an altitude at which the first CE device 44 is disposed in conjunction with the CE device processor 58. However, it is to be understood that that another suitable position receiver other than a cellphone and/or GPS receiver and/or altimeter may be used in accordance with present principles to e.g. determine the location of the first CE device 44 in e.g. all three dimensions.

Continuing the description of the first CE device 44, in some embodiments the first CE device 44 may include one or more cameras 66 that may be, e.g., a thermal imaging camera, a digital camera such as a webcam, and/or a camera integrated into the first CE device 44 and controllable by the CE device processor 58 to gather pictures/images and/or video in accordance with present principles. Also included on the first CE device 44 may be a Bluetooth transceiver 68 and other Near Field Communication (NFC) element 70 for communication with other devices using Bluetooth and/or NFC technology, respectively. An example NFC element can be a radio frequency identification (RFID) element.

Further still, the first CE device 44 may include one or more auxiliary sensors 72 (e.g., a motion sensor such as an accelerometer, gyroscope, cyclometer, or a magnetic sensor, an infrared (IR) sensor, an optical sensor, a speed and/or cadence sensor, a gesture sensor (e.g. for sensing gesture command), etc.) providing input to the CE device processor 58. The first CE device 44 may include still other sensors such as e.g. one or more climate sensors 74 (e.g. barometers, humidity sensors, wind sensors, light sensors, temperature sensors, etc.) and/or one or more biometric sensors 76 providing input to the CE device processor 58. In addition to the foregoing, it is noted that in some embodiments the first CE device 44 may also include an infrared (IR) transmitter and/or IR receiver and/or IR transceiver 42 such as an IR data association (IRDA) device. A battery (not shown) may be provided for powering the first CE device 44. The CE device 44 may communicate with the AVDD 12 through any of the above-described communication modes and related components.

The second CE device 46 may include some or all of the components shown for the CE device 44. Either one or both CE devices may be powered by one or more batteries.

Now in reference to the afore-mentioned at least one server 80, it includes at least one server processor 82, at least one tangible computer readable storage medium 84 such as disk-based or solid state storage, and at least one network interface 86 that, under control of the server processor 82, allows for communication with the other devices of Figure 1 over the network 22, and indeed may facilitate communication between servers and client devices in accordance with present principles. Note that the network interface 86 may be, e.g., a wired or wireless modem or router, Wi-Fi transceiver, or other appropriate interface such as, e.g., a wireless telephony transceiver.

Accordingly, in some embodiments the server 80 may be an Internet server, and may include and perform "cloud" functions such that the devices of the system 10 may access a "cloud" environment via the server 80 in example embodiments. Or, the server 80 may be implemented by a game console or other computer in the same room as the other devices shown in Figure 1 or nearby.

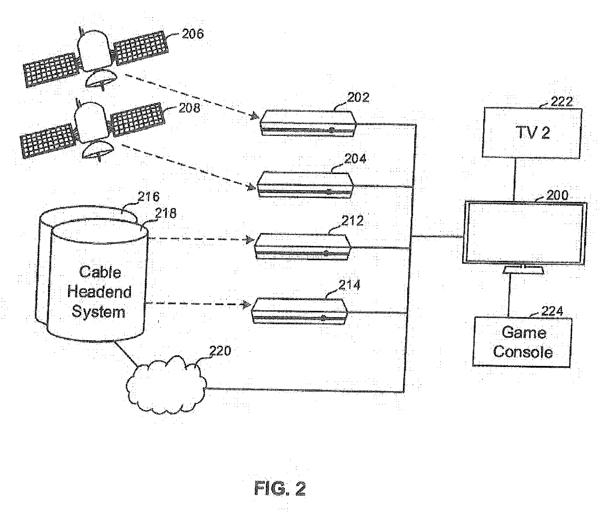

Now referring to Figure 2, an AVDD 200 that may incorporate some or all of the components of the AVDD 12 in Figure 1 is connected to at least one gateway for receiving content, e.g., UHD content such as 4K or 8K content, from the gateway. In the example shown, the AVDD 200 is connected to first and second satellite gateways 202, 204, each of which may be configured as a satellite TV set top box for receiving satellite TV signals from respective satellite systems 206, 208 of respective satellite TV providers.

In addition or in lieu of satellite gateways, the AVDD 200 may receive content from one or more cable TV set top box-type gateways 210, 212, each of which receives content from a respective cable head end 214, 216.

Yet again, instead of set-top box like gateways, the AVDD 200 may receive content from a cloud-based gateway 220. The cloud-based gateway 220 may reside in a network interface device that is local to the AVDD 200 (e.g., a modem of the AVDD 200) or it may reside in a remote Internet server that sends Internet-sourced content to the AVDD 200. In any case, the AVDD 200 may receive multimedia content such as UHD content from the Internet through the cloud-based gateway 220. The gateways are computerized and thus may include appropriate components of any of the CE devices shown in Figure 1.

In some embodiments, only a single set top box-type gateway may be provided using, e.g., the present assignee's remote viewing user interface (RVU) technology.

Tertiary devices may be connected, e.g., via Ethernet or universal serial bus (USB) or WiFi or other wired or wireless protocol to the AVDD 200 in a home network (that may be a mesh-type network) to receive content from the AVDD 200 according to principles herein. In the non-limiting example shown, a second TV 222 is connected to the AVDD 200 to receive content therefrom, as is a video game console 224. Additional devices may be connected to one or more tertiary devices to expand the network. The tertiary devices may include appropriate components of any of the CE devices shown in Figure 1.

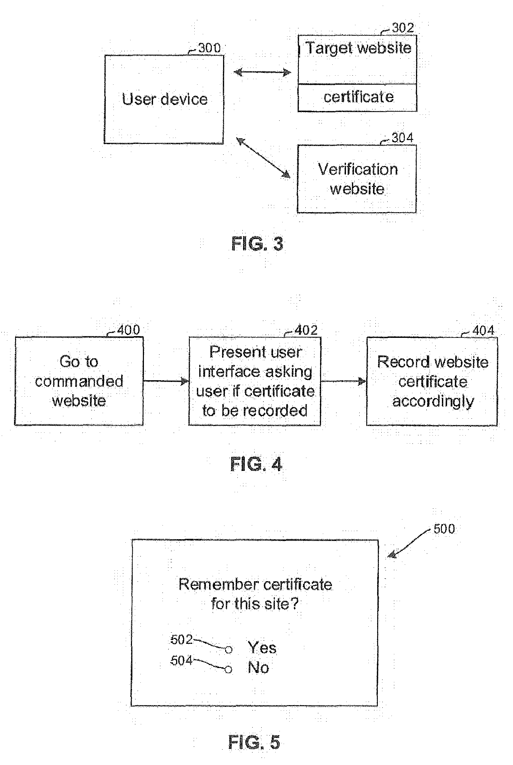

Figure 3 shows a system that may include a user device 300 which may be implemented by, e.g., the CE device 44 in Figure 1 or any other appropriate device discussed above. The user device 300 may communicate via a wired and/or wireless link with a target web site 302 possessing a certificate, and the user device 300 may also communicate with a verification server 304.

Figure 4 illustrates set up logic according to an example. The logic of Figure 4 may be invoked the first time the user navigates to any web site and thereafter may not be invoked again, or the logic of Figure 4 may be invoked the first time the user navigates to each web site to which the user may navigate.

Commencing at block 400, the user of the user device 300 enters a navigation command to "go to" (establish communication with) the target website 302. This command may be entered by clicking on a hyperlink to the target web site, or by typing the uniform resource locator (URL) or other appropriate network name of the web site into the address bar of the browser being executed by the user device 300, or by other appropriate method.

At block 402, an optional UI such as the UI shown in Figure 5 and discussed below may be presented on a display of the user device 300. Even though a server certificate may be signed by a certificate authority or intermediate certificate authority in a cache on the user device (300), the UI enables the user to choose to record the selected fields of the certificate or the entire certificate or alternatively a hash of selected fields or the entire certificate of the target web site. If the user chooses to do so, the fields, certificate or hash of the selected fields or certificate of the target web site is recorded at block 404.

Figure 5 illustrates an optional UI 500 which prompts the user whether the user wishes to record the selected fields, certificate or hash of selected fields or entire certificate from the target web site. The user can select (502) to record the fields/certificate/hash or not to record it (504), in which case the browser operates conventionally, always trusting the certificate presented to the browser by the target web site on subsequent returns to the target web site unless the certificate authority certificate or intermediate certificate authority has been removed from user device (300). In other implementations, the user may not be given the option of "opting out" of recording the certificate of a target web site the first time the target web site is navigated to.

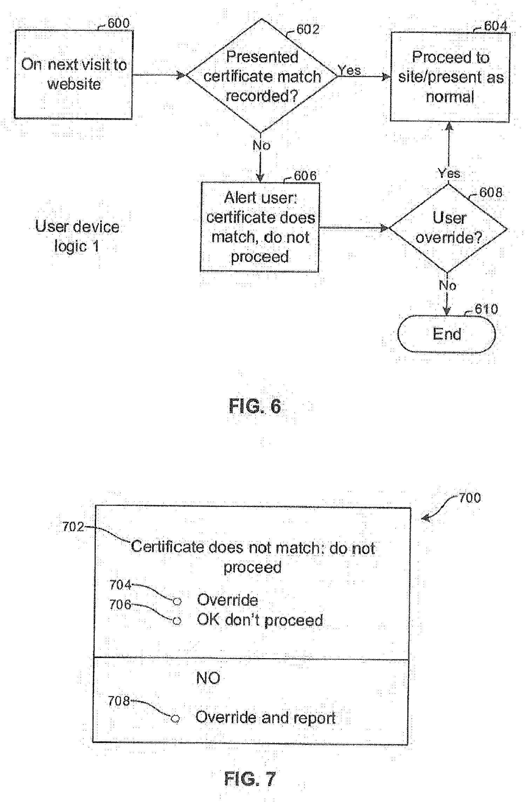

Figure 6 illustrates logic that may be invoked when the user has selected the record option 502 in Figure 5, or that is invoked in embodiments in which the user does not have the option to opt out. At block 600, the second and subsequent times the user navigates to the target web site that provoked invocation of Figure 4 upon initial navigation thereto, the target web site produces its certificate to the user device, and the example logic moves to decision diamond 603 to determine whether the certificate presented by the target web site during the current attempt to navigate to it matches the certificate for the target web site recorded at block 404 of Figure 4. If a match is found, navigation to the target web site may proceed/complete as normal at block 604. The process at block 604 may occur automatically upon a positive test at decision diamond 602 if desired, and it may be accompanied by a message on the user device to the effect that the target web site certificate matches the recorded certificate.

However, if, at decision diamond 602, it is determined that the fields/certificate/hash produced at block 600 does not match the fields/certificate/hash recorded at block 404 in Figure 4, the logic moves to block 606 to impede the completion of navigation to the target web site. In an example, an alert is presented on the display of the user device that the fields/certificate/hash produced at block 600 does not match the fields/certificate/hash recorded at block 404. In such a case, the completion of normal navigation to the target web site may be automatically prevented by the browser of the user device operating according to present principles.

In some embodiments, the logic may continue from block 606 to decision diamond 608, to determine if the user has overridden the warning at block 606. If the user overrides the warning, the logic may complete navigation to the target web site at block 604. Otherwise, the logic can end at state 610.

Figure 7 shows an example UI 700 attendant to the logic of Figure 6 when a match is not found at decision diamond 602 of Figure 6. As shown, an alert or warning 702 is presented on the display of the user device to the effect that the certificate produced at block 600 does not match the certificate recorded at block 404. An override selector 704 may be provided that may be selected by the user manipulating an appropriate input device such as a mouse or by touching the selector 704 when the UI is presented on a touch screen to cause the logic of Figure 6 to move from decision diamond 608 to block 604 in Figure 6.

Also, a do not override selector 706 may be presented on the UI 700 to select not to override the alert or warning, causing the logic of Figure 6 to move from decision diamond 608 to state 610. Similarly, a do not override and report selector 708 may be presented on the UI 700 to select not to override the alert or warning, causing the logic of Figure 6 to move from decision diamond 608 to state 610 and furthermore causing the user device to send an automatic report to a reporting web site whose's address may be hard coded into the browser or otherwise prerecorded by the user device.

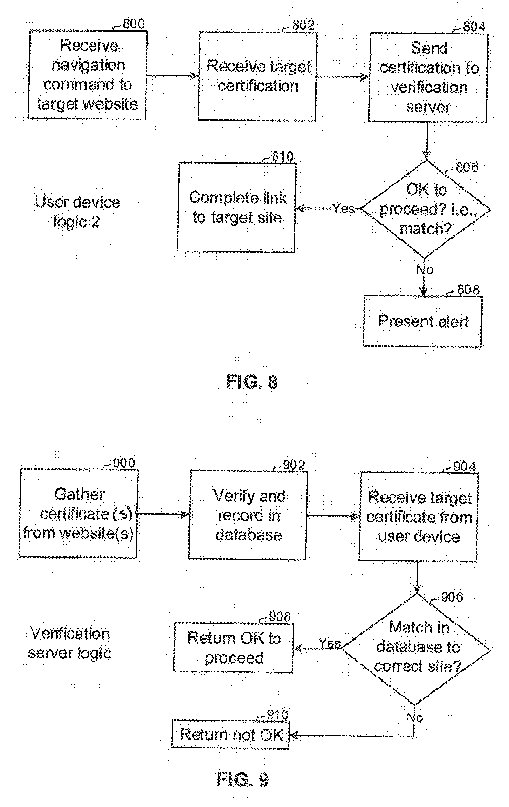

Figures 8 and 9 show additional and/or alternate logic in which the verification server or web site 304 is employed to verify the certificate of the target web site 302. That is, the logic of Figures 8 and 9 may be employed in lieu of the logic described above, or it may be employed as a second test to the logic above, in which a positive test at decision diamond 602, instead of allowing navigation to the target web site to complete, instead employs the additional test at decision diamond 806 discussed below, allowing navigation to proceed as normal to the target web site only in the additional event that a positive test at decision diamond 806 obtains.

With this understanding in mind, commencing at block 800, a navigation command is received at the browser of the user device to navigate to the target web site. The certificate of the target web site is produced by the target and received by the user device at block 802. The user device then sends the selected fields, the entire certificate, or has of the certificate to the verification server at block 804.

Proceeding to decision diamond 806, the user device determines whether it has received a signal from the verification server indicating that the certificate from the target web site has been verified and that it is acceptable to complete normal navigation to the target web site. If no signal is received within a predetermined period of executing the step at block 804, or if a negative signal is received, the logic moves to block 808 to present an alert on the user device, in which case the UI of Figure 7 may be presented on the user device. In contrast, if it is determined that reception has occurred of a signal from the verification server indicating that the certificate from the target web site has been verified, the logic may move from decision diamond 806 to block 810, in which navigation to the target web site may proceed/complete as normal. The process at block 810 may occur automatically upon a positive test at decision diamond 806 if desired, and it may be accompanied by a message on the user device to the effect that the target web site certificate matches the recorded certificate.

Figure 9 illustrates example verification server logic to cooperate with the user device logic of Figure 8. Commencing at block 900, certificate are gathered from candidate target web sites. The certificates are verified at block 902 by certificate verification principles such as those described in Internet Engineering Task Force (IETF) Request for Comments (RFC) 6962, divulged in the instant file history and incorporated herein by reference, and the verified certificates recorded in a database associated with the verification server.

When a target web site certificate is received at block 904 from a user device executing the logic at block 804 of Figure 8, the verification server logic moves to decision diamond 906 to determine if the target certificate matches the certificate for the target web site previously recorded during the process at block 902. If a match is found, the logic moves to block 908 to send a signal to the requesting user device that it is OK for the user device to proceed to the target web site. Otherwise, a signal is sent at block 910 (equivalently, no signal may be returned at all) that it is not OK for the user device to proceed to the target web site.

The above methods may be implemented as software instructions executed by a processor, suitably configured application specific integrated circuits (ASIC) or field programmable gate array (FPGA) modules, or any other convenient manner as would be appreciated by those skilled in those art. Where employed, the software instructions may be embodied in a non-transitory device such as a CD ROM or Flash drive. The software code instructions may alternatively be embodied in a transitory arrangement such as a radio or optical signal, or via a download over the internet.

It will be appreciated that whilst present principals have been described with reference to some example embodiments, these are not intended to be limiting, and that various alternative arrangements may be used to implement the subject matter claimed herein.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. Apparatus comprising:
at least one computer memory that is not a transitory signal and that comprises instructions executable by at least one processor to:
receive, at a user device, a web application command to navigate to a target web site;
receive a first server certificate of the target web site;
present a user interface (UI) on the user device prompting as to whether a representation of the server certificate should be recorded by the user device;
responsive to first input from the UI indicating the representation of the certificate should be recorded by the user device, record, by the user device, the representation of the first certificate;
responsive to second input from the UI indicating the representation of the certificate should not be recorded by the user device, not record, by the user device, the representation of the first certificate;
subsequent to receiving the first input, receive, at the user device, a web application command to navigate to the target web site;
receive a second certificate of the target web site;
compare a representation of the second certificate to the representation of the first certificate recorded by the user device;
responsive to the representation of the first certificate matching the representation of the second certificate, indicate or complete normal navigation to the target web site;
responsive to the representation of the first certificate not matching the representation of the second certificate, perform additional processing steps to determine the security nature of the change; and
present an alert to the web application or UI on the user device depending on the security nature of the change.

2. The apparatus of Claim 1, wherein the instructions are executable to:
responsive to the first certificate not matching the second certificate, present on the user device a selector to override the alert and complete normal navigation to the target web site.

3. The apparatus of Claim 1, wherein the instructions are executable to:
responsive to the first certificate not matching the second certificate, present on the user device a selector to report that the second certificate does not match the first certificate.

4. The apparatus of Claim 1, wherein the instructions are executable to:
subsequent to receiving the second input, receive, at the user device, a browser navigation command to navigate to the target web site;
receive a second certificate of the target web site;
trust the second certificate and complete normal navigation to the target web site.

5. The apparatus of Claim 1, wherein the representation of the certificate is one of the following:
selected fields from the server certificate, the entire certificate, a hash of selected fields of the certificate, and a hash of the entire certificate.

6. The apparatus of Claim 5, comprising at least one display controlled by the at least one processor to present the UI.

7. Apparatus comprising:
at least one computer memory that is not a transitory signal and that comprises instructions executable by at least one processor to:
receive, at a user device, a browser navigation command to navigate to a target web site;
receive a certificate of the target web site;
prior to completing the navigation command, send the certificate to a verification server;
responsive to a first signal from the verification server sent in response to the verification server testing the certificate, complete normal navigation to the target web site; and
responsive to a second signal from the verification server sent in response to the verification server testing the certificate, present an alert on the user device.

8. The apparatus of Claim 7, wherein the instructions are executable to:
responsive to receiving the second signal, present on the user device a selector to override the alert and complete normal navigation to the target web site.

9. The apparatus of Claim 1, wherein the instructions are executable to:
responsive to the second signal, perform additional processing steps to determine a security nature of a certificate change.

10. The apparatus of Claim 7, wherein the instructions are executable to:
responsive to receiving the second signal, present on the user device a selector to report that the certificate is suspect.

11. The apparatus of Claim 7, comprising the at least one processor.

12. The apparatus of Claim 7, comprising at least one display controlled by the at least one processor to present the UI.

13. The apparatus of Claim 7, wherein a network address of the verification server is hard-coded into a browser of the user device from which the navigation command is received.

14. Method comprising:
at a verification server, receiving from a user device a target certificate of a target web site not hosted by the verification server;
at the verification server, comparing the target certificate to a previously stored certificate of the target web site;
responsive to a determination that the target certificate matches the previously stored certificate, sending to the user device a first signal indicating that the user device may safely complete navigation to the target web site; and
responsive to a determination that the target certificate does not match the previously stored certificate, sending to the user device a second signal indicating that the user device may not safely complete navigation to the target web site.

15. The method of Claim 14, comprising receiving at the verification server plural certificates from respective candidate target web sites and storing the plural certificates.
